# EUROPÄISCHE PATENTSCHRIFT

(11) **EP 1 409 783 B1**
(45) Veröffentlichungstag und Bekanntmachung des Hinweises auf die Patenterteilung: **05.01.2011**
(21) Anmeldenummer: 01940387.2
(22) Anmeldetag: 02.05.2001
(51) Int. Cl.: D06H 7/22, B26D 7/10, B26F 3/08

(54) **VERFAHREN UND VORRICHTUNG ZUM MECHANISCH-THERMISCHEN TRENNEN VON UNTERSCHIEDLICHEN MATERIALIEN**
METHOD AND DEVICE FOR THE MECHANICAL-THERMAL SEPARATION OF DIFFERENT MATERIALS
PROCEDE ET DISPOSITIF DE SEPARATION PAR VOIE MECANIQUE ET THERMIQUE DE DIFFERENTS MATERIAUX

(30) Priorität: 04.05.2000 DE 10021630
(43) Veröffentlichungstag der Anmeldung: 21.04.2004
(73) Patentinhaber: Ellner, Frank, 78056 Villingen-Schwenningen (DE)
(72) Erfinder: ELLNER, Frank, 78056 Villingen-Schwenningen (DE); MAURER, Roswitha, 78056 Villingen-Schwennigen (DE)
(74) Vertreter: Weiss, Peter
(86) Internationale Anmeldenummer: PCT/EP2001/004897
(87) Internationale Veröffentlichungsnummer: WO 2001/083872

(56) Entgegenhaltungen:
- DE-A- 4 011 293
- US-A- 2 293 178
- US-A- 2 623 586
- US-A- 2 628 412
- US-A- 4 288 271
- PATENT ABSTRACTS OF JAPAN vol. 012, no. 352 (M-744), 21. September 1988 (1988-09-21) & JP 63 111091 A (ASAHI CHEM IND CO LTD), 16. Mai 1988 (1988-05-16)

## Beschreibung

Die Erfindung betrifft ein Verfahren und eine Vorrichtung zum mechanisch-thermischen Trennen von unterschiedlichen Materialien wie Fäden, textile Flächengebilde, Kunststofffolien durch gleichzeitiges Erwärmen und Verdichten gemäß den Ansprüchen 1 und 6.

Nach dem bekannten Stand der Technik sind Verfahren und Vorrichtungen bekannt, bei denen sowohl indirekt beheizte feststehende oder rotierende Messer als auch direkt beheizte stromdurchflossene Messer oder Drahtbügel auf eine Gegenfläche drücken und durchlaufende Materialien dabei schmelzen und trennen.

In der DE 40 11 293 A1 wird eine Vorrichtung gemäss dem Oberbegriff von Anspruch 6 zum thermischen Trennen von textilen Flächengebilden beschrieben, bei der ein beheizter Drahtbügel mit einem abgeflachten Scheitel auf das textile Flächengebilde einwirkt und dieses durch thermisch-mechanische Kombinationswirkung trennt und die Trennkante verschweisst.

Aus JP 63 111 091 A ist bekannt, eine nadelförmige Elektrode gegen eine leitfähige Gegenfläche zu verschieben, wobei durch Stromanlegen eine Wärmeeffekt am Kontaktabschnitt zwischen Elektrode und Gegenfläche erzeugt wird, so dass eine extrem dünne Substanz, wie Folie, Papier, usw. kontinuierlich geschmolzen und geschnitten werden kann.

Aus der DE 30 27 440 A1 ist eine Trennvorrichtung für Textiletiketten bekannt, die aus einem aufheizbaren Messer und einer Druckleiste besteht, die gegen das Etikettband in Richtung gegen eine Trennkante des Messers andrückbar ist.

Aus der DE 22 14 554 ist eine Vorrichtung zum Schneiden von Bändern bekannt, bei der ein Schneidwerkzeug vorgesehen ist, welches mehrere nebeneinander angeordnete Schneidmesser aufweist, die gegen eine erhitzte Messerkontaktwalze drücken. Die Gewebebahn wird dabei nur in den Bereichen mit der Messerkontaktwalze in

Berührung gebracht, in denen das nicht erhitzte Schneidwerkzeug gegen die Messerkontaktwalze drückt.

Aus der DE 25 02 724 ist es bekannt, die Temperatur der Klinge zum Trennen von Etikettenband oberhalb der Schmelztemperatur des Bandes zu halten und die Temperatur der der Klinge gegenüberliegenden Platte wesentlich darunter zu halten.

Aus den DE 195 36 963 A1 und 196 04 735 A1 ist eine Vorrichtung zum Herstellern von textilen Bändern aus einer Breitbahn bekannt, bei der eine Schar von Schmelzschneidern vorgesehen ist, die aus zwei gegeneinander kraftbelasteten Gliedern bestehen, von denen eines beheizt ist. Die Breitbahn wird zwischen den sich berührenden Schneidgliedern hindurchgezogen. Um eine weiche Schmelzkante an den Bändern zu erhalten, ist ein Druckstück angeordnet, welches im Bereich des Schmelzschnittes gegen die Flächenseite der Breitbahn gepresst wird.

Aus der EP 0549748 B1 ist ein Verfahren zum thermischen Schneiden bekannt, bei dem der aktive Teil des heissen Schneiddrahtes in einer Richtung quer zur Bewegungsrichtung der Textilbahn angeordnet und unter einem Winkel zwischen 0° und 90° gegen die Führungsebene geneigt gehalten wird und dadurch einen schrägen Schnitt erzielt, der einen Teil der Schmelzmasse einem Verschnittabfallstreifen zuordnet und bei dem der Schmelzrand auf der Rückseite der Textilbahn liegt.

Nachteilig ist es bei den bekannten Verfahren und Vorrichtungen, daß bei diesen Verfahren jeweils das gesamte Trennorgan erwärmt wird und die Temperatur des Trennorgans zur Berühr- bzw. Trennstelle abnimmt

Eine optimale Kantenqualität erhält man, wenn das Material mechanisch verdichtet wird und die Schmelztemperatur des Materials an einem Punkt kurzzeitig erreicht bzw. leicht überschritten wird, um die Kante in diesem Zustand zu fixieren. Durch die höhere Temperatur von herkömmlichen Trennorganen beginnt aber der Schmelzprozess bereits mit der Berührung zwischen Trennorgan und Material, so daß eine mechanische Verdichtung nicht stattfinden kann. Weiterhin nimmt der Energiebedarf mit steigendem Abnahmebedarf, z. B. bei höheren Geschwindigkeiten, überproportional zu, um den notwendigen Wärmestrom zur Trennstelle zu gewährleisten. Auch bei dünnsten Materialien und damit eigentlich minimalem Energiebedarf muss immer das gesamte Trennorgan auf die notwendige Schmelz- bzw. Trenntemperatur gebracht werden. Es gibt Anwendungen, bei denen nur ein Trennen als Alternative zum Schneiden gewünscht wird, ohne daß eine Kantenverschmelzung notwendig ist. Dafür sollte das Trennorgan möglichst dünn sein. Dies ist bei herkömmlichen Verfahren beschränkt durch den notwendigen Wärmestrom bei gleichzeitiger mechanischer Stabilität.

Der Erfindung liegt die Aufgabe zugrunde, ein Verfahren und eine Vorrichtung der beschriebenen Art zu entwickeln, mit denen die Nachteile des Standes der Technik vermieden werden und mit denen bei minimaler Energiemenge mit einer in weiten Grenzen variierbaren Kombination von Temperaturzunahme und mechanischer Verdichtung die materialspezifische Trennaufgabe gewährleistet wird.

Diese Aufgabe wird mit einem Verfahren und einer Vorrichtung gemäß den Merkmalen der Patentansprüche 1 und 6 gelöst. Nach dem Verfahren zum mechanisch-thermischen Trennen von unterschiedlichen Materialien wie textile Flächengebilde, Fäden, Kunststofffolien durch Erwärmen und gleichzeitiges Verdichten des Materials, wird das Material durch einen Spalt geführt, welcher zwischen einem Werkzeug und einer das Werkzeug punktförmig berührenden Gegenfläche gebildet wird, wobei über den Berührpunkt ein regelbarer elektrischer Strom so geleitet wird, dass ein der Materialstärke angepasstes Temperaturprofil im Bereich des Berührungspunktes derart eingestellt wird, dass die Temperatur von Werkzeug und Gegenfläche unabhängig von deren Form und Querschnitt zum Berührungspunkt hin, also in Vorschubrichtung des Materials, auf denselben Maximalwert ansteigt.

Durch den Berührungspunkt fliesst ein manuell einstellbarer oder automatisch geregelter Strom, welcher den Berührpunkt erhitzt. Durch die Geometrie des Werkzeuges und der Gegenfläche sowie deren Materialeigenschaften (Wärmeleitfähigkeit, elektrische Leitfähigkeit, Werkstoffkombinationen, Beschichtung, Oberflächenbehandlung usw.) lassen sich die gewünschten Temperaturfolie sowie die mechanischen Eigenschaften (Verdichtung, Reibung, Quetschung usw.) in weiten Grenzen beeinflussen.

Vorteilhaft ist es, mit sehr niedrigen Spannung <= 1V und mittleren bis hohen Strömen zu arbeiten, da dies die Materialauswahl in bezug auf mittel bis gut leitende Stoffe erweitert.

Bei der Anordnung zum mechanisch-thermischen Trennen von unterschiedlichen Materialien wie textile Flächengebilde, Fäden, Kunststofffolien mittels eines

Werkzeugs und einer Gegenfläche, ist das Werkzeug zur Gegenfläche so angeordnet, daß ein keilförmiger Spalt mit einer punktförmigen Berührungsstelle gebildet ist, durch den das Material geführt ist, wobei das Werkzeug und die Gegenfläche mit einem regelbaren Stromkreis so verbunden sind, daß durch den Berührpunkt ein regelbarer Strom fließt, und wobei Werkzeug und Gegenfläche in der Geometrie und in den Materialeigenschaften sowie in der Oberflächenbehandlung aufeinander abgestrimmt sind, um ein gewünschtes Temperaturprofil im Bereich des Berührpunktes zu erhalten.

Werkzeug und Gegenfläche können feststehend, eines von beiden drehend oder oszillierend oder beide drehend oder oszillierend ausgeführt sein. In der drehenden Ausführung sind beispielsweise auch profilierte Werkzeuge (Zickzack) oder perforierende Werkzeuge denkbar, wenn gewährleistet ist, dass der Berührkontakt inner aufrechterhalten wird.

Da die höchste Temperatur immer am Berührpunkt herrscht, kann ein Temperaturfühler direkt dort mit kontaktierender oder berührungsloser (IR) Erfassung angebracht werden, wodurch kürzeste Nachregelzeiten realisierbar sind.

Der Stromfluss durch den Berührpunkt kann gleichzeitig als Fehlersignal verwendet werden. Jede Stromunterbrechung, auch wenn sie sehr kurzzeitig erfolgt, hat zwangsläufig eine Nichttrennung des Materials zur Folge.

Es wird, wenn erforderlich bzw. gewünscht, insbesondere dadurch eine weiche Trennkante im Material erreicht, dass nur ein erhitzter Punkt zum Schneiden eingesetzt wird, die Wärme in der Trennstelle entsteht und die Temperatur des Materials vor der Trennung noch unter dem Schmelzpunkt liegt.

Zweckmäßige Ausgestaltungen der Erfindung sind in den Unteransprüchen angegeben.

Die Erfindung wird nachfolgend in einem Ausführungsbeispiel einer Vorrichtung zum Trennen von Polyestermaterial näher erläutert. In der zugehörigen Zeichnung zeigen:
- Fig. 1 :: die schematische Darstellung einer Vorrichtung nach der Erfindung,
- Fig. 2 :: die schematische Darstellung des Temperaturprofils an der Trennstelle mit einer Vorrichtung nach dem Stand der Technik und
- Fig. 3 :: die schematische Darstellung des Temperaturprofils an der Trenn- stelle (im Bereich des Berühr- punktes) bei Verwendung des Verfahrens nach der Erfindung.

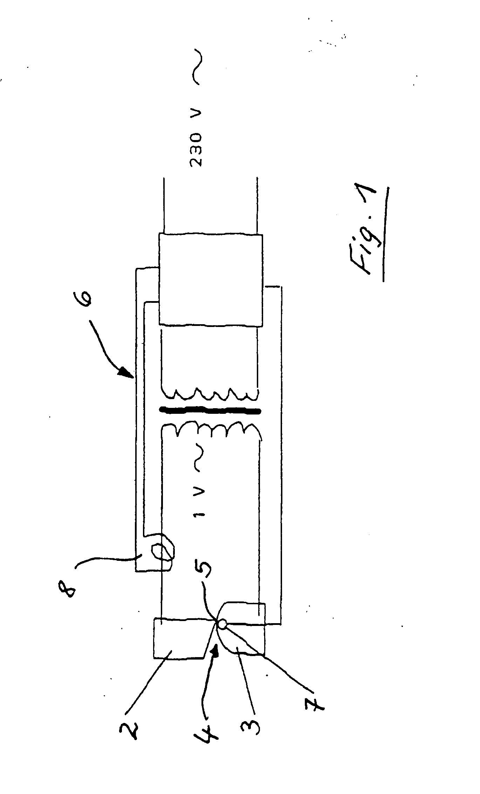

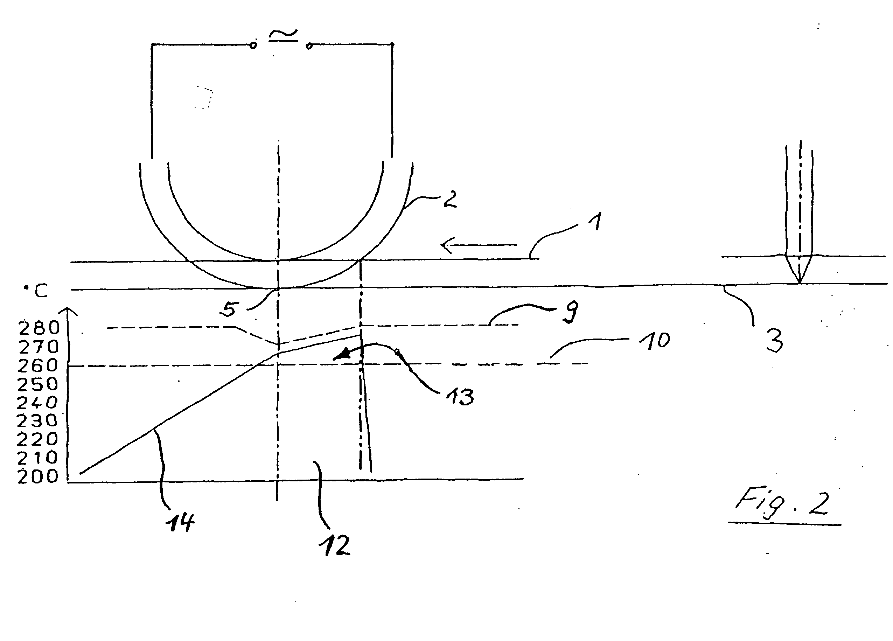

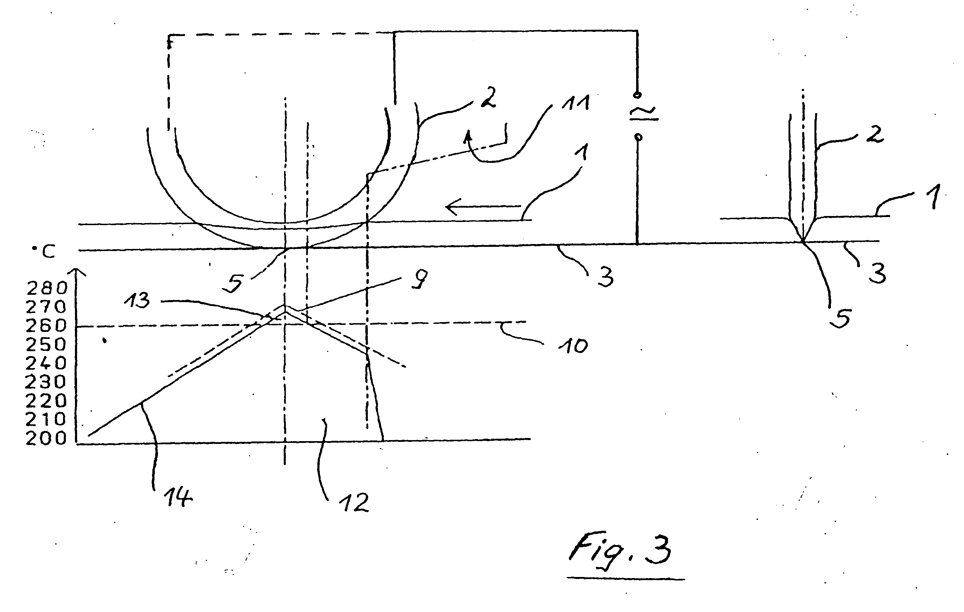

Entsprechend der Darstellung in der Fig. 1 besteht die Vorrichtung zum mechanisch-thermischen Trennen von unterschiedlichen Materialien nach der Erfindung im wesentlichen aus einem Werkzeug 2 und einer Gegenfläche 3. Das Werkzeug 2 und die Gegenfläche 3 sind zueinander so positioniert, daß sich zwischen ihnen ein keilförmiger Spalt 4 mit einer punktförmigen Berührstelle 5 ausbildet, in den ein Material 1 (Fig. 2, 3) geführt wird.

Das Werkzeug 2 und die Gegenfläche 3 sind mit einem regelbaren Stromkreis 6 verbunden, über den der Berührpunkt 5 regelbar erwärmt wird.

Zur Regelung der Temperatur des Berührpunkts 5 ist an der Berührstelle 5 ein Temperaturfühler 7 geschaltet, der durch direkten Kontakt oder berührungslos die Temperatur messen kann.

Zur Gewinnung eines Fehlersignals ist in der Leitung vom oder zum Berührpunkt 5 ein Stromdetektor 8 angeordnet.

Das Werkzeug 2 und die Gegenfläche 3 kennen unterschiedliche geometrische Formen aufweisen.

Zur Erläuterung des Verfahrens nach der Erfindung ist in den Fig. 2 und 3 ein Vergleich der Temperaturprofile an der Trennstelle bzw. dem Berührpunkt 5 bei Anwendung bekannter Verfahren und Vorrichtungen (Fig. 2) und des Verfahrens und der Vorrichtung nach der Erfindung (Fig. 3) dargestellt.

Zum direkten Vergleich wurden dieselben Massen und Geometrien der Trennorgane (Werkzeug 2) gewählt. Es soll damit beispielsweise ein etwas komprimierbares Polyestermaterial getrennt werden. Der Schmelzpunkt 10 des Materials 1 liegt bei 260°C.

Beim konventionellen Verfahren gemäß Fig. 2 beginnt der Schmelzprozess, wenn die ersten Fasern des Materials 1 den stromdurchflossenen Trennbügel 2 berühren, weil dessen Temperatur prinzipbedingt bereits dort erheblich über der Schmelztemperatur 10 des Materials 1 liegen muss. Aus diesem Grunde ist auch keine mechanische Verdichtung möglich, und es entsteht bei der Verdrängung des Materials 1 durch den Bügel 2 eine leichte Wulstbildung. Da die Wärmezufuhr über den Bügel 2 erfolgt und der Berührpunkt 5 zur Gegenfläche 3 hin und an das Material 1 Wärme abgibt, hat der Bügel 2 an den Berührpunkt 5 mit der Gegenfläche 3 die niedrigste Temperatur, welche aber immer noch höher als die Schmelztemperatur 10 des Materials 1 sein muss, um dieses sicher zu trennen. Mit steigender Materialgeschwindigkeit (Materialtransport in Pfeilrichtung) wird die Temperaturdifferenz immer grösser, weil an den Bügelabschnitten ohne Materialkontakt nur wenig Wärmeenergie abgenommen wird.

Im Gegensatz dazu wird beim Verfahren nach der Erfindung gemäß der Darstellung in der Fig. 3 die Schmelztemperatur 10 weniger und kürzer überschritten. In der Plastifizierungszone 12 kann eine mechanische Verdichtung 11 erfolgen, welche die Materialverdrängung in der Schmelzzone 13 kompensiert und eine Wulstbildung vermeidet. Mit steigender Materialgeschwindigkeit (Materialtransport in Pfeilrichtung) wird zusätzliche Wärmeenergie über den Berührpunkt 5 der Schmelzzone 13 zugeführt und dort durch das Material 1 aufgenommen. Durch die Temperaturkontrolle am Berührpunkt 5 kann sichergestellt werden, dass nur soviel Energie zugeführt wird, wie zur Erhaltung des Temperaturniveaus notwendig ist.

Nach einer vorteilhaften Ausführungsform des Verfahrens werden das Werkzeug 2 und/oder die Gegenfläche 3 in Bezug auf die zu erreichende Maximaltemperatur im Bereich des Berührpunktes 5 auf ein mittleres Temperaturniveau vorgewarnt. Die Basistemperatur kann zum Beispiel 80% der Schmelztemperatur des Materials 1 betragen, so dass im Berührpunkt 5 nur noch die zum Schneiden/Schmelzen notwendige Wärmeenergiedifferenz zur Basistemperatur eingebracht werden muss.

Die Kombination von konventioneller Erwärmung (Basistemperatur) des Werkzeugs 2 und/oder der Gegenfläche 3 und der Erwärmung im Berührpunkt 5 nach dem Verfahren erweitert die Anwendungsbreite des Verfahrens hinsichtlich der zu verarbeitenden Materialstärken und der anzuwendenden Vorschubgeschwindigkeiten des Materials 1.

Bei der Anwendung des Verfahrens nach der Erfindung auf im wesentlichen nicht komprimierbare Materialien ist zu beachten, dass zur Vermeidung einer zu starken Wulstbildung die Stärke des Werkzeugs 2 entsprechend verändert bzw. minimiert wird.

Wenn eine stärkere Verschmelzung der Kanten gewünscht wird, dann kann dies durch die entsprechende geometrische Ausformung des Werkzeugs 2 bzw. der Gegenfläche 3 erreicht werden.

Das Verfahren nach der Erfindung gewährleistet weitere vorteilhafte Anwendungen.

Die Gegenfläche 3 kann konstruktiv so gestaltet werden, daß sie durch aktive Erwärmung über den Berührpunkt 5 eine erhebliche Energiemenge von der Gegenseite in das Material 1 einbringt.

Wird kein Verschmelzen der Kanten gewünscht, ein Verschmelzen ist in der Regel immer mit einer gewissen Verhärtung verbunden, dann kann bei einem Temperaturniveau unterhalb des Materialschmelzpunktes am Berührpunkt 5 durch erhöhte mechanische Quetschung eine plastifizierte Verdichtung der Kante erzielt werden. Damit lassen sich auch Materialien mit nicht thermoplastischen Anteilen trennen.

Besonders vorteilhaft sind mit diesem Verfahren zu trennen:
- sehr dünne thermoplastische Materialien, da die Wärmeenergie minimal ist;
- dünne bis mittlere thermoplastische Materialien, welche ohne Kantenverdickung leicht verschweisst werden sollen;
- bis zu mittleren Dicken komprimierbare thermoplastische Materialien;
- quetschschnittgeeignete Materialien, bei denen durch Wärmeeinwirkung die Schnittkräfte verringert werden können und/oder die Kanten verschweisst werden sollen.

### Bezugszeichenliste

- 1: Material
- 2: Werkzeug
- 3: Gegenfläche
- 4: Keilförmiger Spalt
- 5: Berührpunkt
- 6: Stromkreis
- 7: Temperaturfühler
- 8: Stromdetektor
- 9: Temperaturkurve des Werkzeugs
- 10: Schmelztemperatur des Materials
- 11: Verdichtungsbereich
- 12: Plastifizierungszone
- 13: Schmelzzone
- 14: Temperaturkurve des Materials

## Patentansprüche

1. Verfahren zum mechanisch-thermischen Trennen von, unterschiedlichen Materialien wie textile Flächengebilde, Fäden, Kunststofffolien durch Erwärmen und gleichzeitiges Verdichten des Materials, wobei das Material durch einen an einem Ende geschlossenen Spalt (4) in Transportrichtung geführt wird, welcher zwischen einem Werkzeug (2) und einer das Werkzeug in einem Punkt (5) berührenden Gegenfläche (3) gebildet wird, **dadurch gekennzeichnet, dass** durch diesen Berührpunkt ein regelbarer elektrischer Strom so geleitet wird, dass ein der Materialstärke angepasstes Temperaturprofil im Bereich des Berührpunktes (5) entsteht, wobei die Temperaturen von Werkzeug (2) und Gegenfläche (3) unabhängig von deren Form und Querschnitt zum Berührpunkt hin, also in Transportrichtung des Materials, auf denselben Maximalwert ansteigen.

2. Verfahren nach Anspruch 1, **dadurch gekennzeichnet, dass** der Spalt (4) keilförmig und das Werkzeug (2) und/oder die Gegenfläche (3) feststehend und/oder drehend und/oder oszillierend ausgeführt werden.

3. Verfahren nach Anspruch 1, **dadurch gekennzeichnet, dass** am Berührpunkt (5) ein Temperaturfühler (7) direkt kontaktierend oder berührungslos zur Verkürzung von Nachregelzeiten eingesetzt wird.

4. Verfahren nach Anspruch 1, **dadurch gekennzeichnet, dass** das Werkzeug (2) und/oder die Gegenfläche (3) auf eine Basistemperatur vorgewärmt werden, die unter dem im Berührpunkt zu erreichenden Maximalwert liegt.

5. Verfahren nach Anspruch 1, **dadurch gekennzeichnet, dass** der Stromfluss durch den Berührpunkt als Fehlersignal verwendet wird.

6. Anordnung zum mechanisch-thermischen Trennen von unterschiedlichen Materialien wie textile Flächengebilde, Fäden, Kunststofffolien mittels eines Werkzeugs (2) und einer Gegenfläche (3), wobei das Werkzeug (2) zur Gegenfläche (3) so angeordnet ist, dass ein an einem Ende durch einen Berührpunkt (5) geschlossener keilförmiger Spalt (4) gebildet ist, durch den das Material (1) geführt ist, **dadurch gekennzeichnet, daß** das Werkzeug (2) und die Gegenfläche (3) mit einem regelbaren Stromkreis (6) so verbunden sind, dass durch den Berührpunkt ein regelbarer Strom fließt, und daß Werkzeug (2) und Gegenfläche (3) in der Geometrie und in den Materialeigenschaften sowie in der Oberflächenbehandlung aufeinander abgestimmt sind, um ein gewünschtes Temperaturprofil im Bereich des Berührpunktes (5) zu erhalten.

7. Anordnung nach Anspruch 6, **dadurch gekennzeichnet, dass** zur Gewinnung eines Fehlersignales und/oder zur Regelung der Temperatur des Berührpunktes ein Stromdetektor (8) in der Leitung von der oder zu dem Berührpunkt (5) und ein Temperaturfühler (7) an dem Berührpunkt (5) angeordnet sind.

## Claims

1. Method for the mechanical-thermal severing of different materials, such as textile fabrics, yarns and plastic films, by heating and simultaneously compacting the material, the material being passed in the transporting direction through a gap (4), which is closed at one end and formed between a tool (2) and a counter surface (3), contacting the tool at one point (5), **characterized in that** a controllable electric current is passed through this contact point, so that a temperature profile, adapted to the thickness of the material, develops in the area of the contact point (5), the temperatures of the tool (2) and of the counter surface (3), independently of their shape and cross-section, increasing in the direction of the contact point, that is, in the transporting direction of the material, to the same maximum value.

2. Method according to Claim 1, **characterized in that** the gap (4) is wedge-shaped and that the tool (2) and/or the counter surface (3) are constructed to be stationary and/or rotating and/or oscillating.

3. Method according to Claim 1, **characterized in that** a directly contacting or contactless temperature sensor is used at the contact point (5) for shortening the adjustment times.

4. Method according to Claim 1, **characterized in that** the tool (2) and/or the counter surface (3) are preheated to a basic temperature which is below the maximum value to be attained at the contact point.

5. Method according to Claim 1, **characterized in that** the current flowing through the contact point is used as an error signal.

6. Arrangement for the mechanical-thermal severing of different materials, such as textile fabrics, yarns and plastic sheets, by means of a tool (2) and a counter surface (3), the tool (2) being disposed with respect to the counter surface (3) so that a wedge-shaped gap (4) is formed, which is closed at one end by a contact point (5) and through which the material (1) is passed, **characterized in that** the tool (2) and the counter surface (3) are connected to a controllable circuit (6), so that a controllable current flows through the contact point, and **in that** the geometry and material properties as well as the surface treatment of the tool (2) and of the counter surface (3) are matched to one another, in order to obtain a desired temperature profile in the area of the contact point (5).

7. Arrangement according to Claim 6, **characterized in that**, for obtaining an error signal and/or for controlling the temperature of the contact point (5), a current detector (8) is disposed in the lead from or to the contact point (5) and a temperature sensor (7) is disposed at the contact point (5).

## Revendications

1. Procédé de séparation mécanique-thermique de différents matériaux, tels que structures de surface textiles, fils, films plastiques, en chauffant et en compactant simultanément le matériau, le matériau étant guidé dans le sens de transport à travers un interstice (4), fermé à une extrémité, formé entre un outil (2) et une contre-face (3) en contact en un point avec l'outil, **caractérisé par le fait que** par ce point de contact est guidé un courant électrique réglable de sorte qu'il se produise, à l'endroit du point de contact (5), un profil de température adapté à l'épaisseur de matériau, les températures de l'outil (2) et de la contre-face (3) montant, indépendamment de leur forme et de leur section, vers le point de contact, donc dans le sens de transport du matériau, à la même valeur maximale.

2. Procédé selon la revendication 1, **caractérisé par le fait que** l'interstice (4) est réalisé cunéiforme et l'outil (2) et/ou la contre-face (3) sont réalisés de manière stationnaire et/ou rotative et/ou oscillante.

3. Procédé selon la revendication 1, **caractérisé par le fait qu'**au point de contact (5) est utilisé un capteur de température (7) à contact direct ou sans contact pour raccourcir les temps de post-réglage.

4. Procédé selon la revendication 1, **caractérisé par le fait que** l'outil (2) et/ou la contre-face (3) sont préchauffés à une température de base qui est inférieure à la valeur maximale à atteindre au point de contact.

5. Procédé selon la revendication 1, **caractérisé par le fait que** le flux de courant passant par le point de contact est utilisé comme signal d'erreur.

6. Aménagement de séparation mécanique-thermique de différents matériaux, tels que structures de surface textiles, fils, films plastiques, à l'aide d'un outil (2) et d'une contre-face (3), l'outil (2) étant disposé par rapport à la contre-face (3) de sorte que soit formé un interstice cunéiforme, fermé à une extrémité par un point de contact (5), à travers lequel est guidé le matériau (1), **caractérisé par le fait que** l'outil (2) et la contre-face (3) sont reliés par un circuit de courant (6) réglable de sorte que par le point de contact circule un courant réglable et que l'outil (2) et la contre-face (3) sont accordés l'un sur l'autre en géométrie et en propriétés de matériau ainsi qu'en traitement de surface, pour obtenir un profil de température désiré à l'endroit du point de contact (5).

7. Aménagement selon la revendication 6, **caractérisé par le fait que**, pour l'obtention d'un signal d'erreur et/ou pour le réglage de la température du point de contact, un détecteur de courant (8) est disposé dans la ligne du ou vers le point de contact (5) et un capteur de température (7) est disposé au point de contact (5).
